# EUROPEAN PATENT SPECIFICATION

(11) **EP 0 853 876 B1**
(45) Date of publication and mention of the grant of the patent: **23.08.2000**
(21) Application number: 98200071.3
(22) Date of filing: 14.01.1998
(51) Int. Cl.: A01K 1/015, E04C 2/42

(54) **Flooring element for supporting animals**
Bodenelement für Standflächen von Vieh
Revêtement de sol portant des animaux

(30) Priority: 17.01.1997 BE 9700053
(43) Date of publication of application: 22.07.1998
(73) Proprietor: Paneltim N.V., 8920 Langemark (BE)
(72) Inventor: Deltour, Ludo, 8920 Langemark (BE)
(74) Representative: Donné, Eddy

(56) References cited:
- AT-A- 353 049
- DE-A- 3 229 671
- DE-A- 3 244 732
- GB-A- 2 136 472

## Description

This invention relates to a flooring element for supporting animals, comprising a body with a top which forms the supporting surface for the animals, in which openings are provided for the passage of dung, which exit from the underside between respectively opposite walls, which go apart from each other in a downward direction (see for example DE-A-32 44 732).

This invention in particular relates to a floor grating, with the above mentioned characteristics.

Such floor gratings are generally known. They are among others used for the construction of floors in stalls for farmyard animals.

A known floor grating is made of synthetic material and comprises a rectangular frame with a number of ribs crossing each other according to mutually perpendicular directions. Two opposite edges of the frame are provided with respectively hook-shaped protruding elements for hooking the grating on to two parallel supporting slats. On each of the two other opposite edges means of attachment are provided for connecting the floor grating to a respectively neighbouring floor grating.

Each rib has a rounded upper part that is provided symmetrically on a vertically extending wing, which is narrower than the upper part, so that the profile of each rib has more or less the form of a mushroom.

The wings have a width which slightly decreases in downward direction in order to ensure a good uncasing out of the mould. The angle between the flanks and the vertical line of symmetry of the respective wings has an amplitude of nearly 1°. This angle has the same amplitude at each rib.

The part of the upper part of each rib protruding on both sides past the wing is provided underneath with a leakage rim. The tops of the upper parts of the various ribs of the floor grating form a supporting surface for the animals. The openings of the grating are provided between the upper parts of the ribs crossing each other. Each opening exits from the underside into a space which is delimited on the sides by two pairs of opposite flanks of respective wings.

These floor gratings present the advantage that a considerable part of the excreta of the animals falls down through the grating openings, or is pressed through by the animals themselves, and is therefore removed from the animals without human intervention. This undoubtedly promotes hygiene in the stall and the health of the animals.

The stall must however also be regularly thoroughly cleaned, among others in order to prevent as far as possible the spread of bacteria and germs among the animals. Thus for example, after a group of animals has been removed from the stall and before another group of animals occupies the liberated space, the stall must be particularly thoroughly cleaned and disinfected. A small amount of unremoved dung from an animal from the first group, can indeed be the cause of a disease of an animal from the first group being transmitted to the animals of the new group.

Floor gratings must therefore be capable of being well cleaned. Because of their specific structure they always have however a number of places which are difficult to reach, so that a thorough cleaning of these places is difficult and time-consuming.

With the known floor gratings dung often remains sticking to the undersides of the upper parts, and to the wing flanks of the ribs. Since these are difficultly accessible places this hinders a thorough cleaning of these floor gratings.

The principal cause of this is that excreta which are pressed through the openings by the animals themselves (e.g. with the legs) remain stuck under the openings between the opposite flanks of the wings.

The latter is furthermore in itself also disadvantageous for hygiene and health in the living space of the animals. On the one hand the animals can come into contact with the dung sticking under the opening and on the other hand no other dung can fall down through this opening.

The purpose of this invention is to provide a flooring element for supporting animals, whereby the chance of dung remaining stuck under the openings is considerably less than with known floor gratings.

This purpose is achieved by according to this invention providing a flooring element with the characteristics mentioned in the first paragraph of this description, of which a number of openings exit between two opposite walls which form a different angle in relation to a plane of symmetry of the opening.

Because of the fact that the opposite walls extend downwards at a different angle in relation to the plane of symmetry of the opening an asymmetrical disposition of these walls in relation to this plane of symmetry is obtained.

Dung is a compressible and more or less elastic substance. If an amount of dung is pressed through the opening, this is compressed in the opening. This compression occurs symmetrically in relation to a plane of symmetry of the opening. After leaving the opening the dung expands. This expansion is again symmetrical in relation to the aforementioned plane of symmetry. Since the aforementioned walls under the opening are disposed asymmetrically in relation to this plane of symmetry there will be a smaller contact surface between the expanded dung and one of the walls than between the dung and the other wall. Because of this the chance of an amount of dung remaining stuck between these walls is very small.

In a particularly advantageous embodiment the aforementioned walls extend downwards to a different height under the level of the supporting surface, with the result that the chance of an amount of dung remaining stuck between these walls is still further reduced.

In another preferred embodiment the body comprises at least two ribs running next to each other, while each rib comprises an upper part and thereunder a downward extending wing, while the tops of these upper parts are part of the supporting surface, while the aforementioned opening is delimited on the sides by these upper parts, and while the aforementioned walls are the opposite flanks of the wings of these ribs.

With a particularly preferred embodiment of the flooring element according to this invention the upper part of each rib comprises an edge protruding in the direction of the plane of symmetry of the opening past the wing of the rib, while the underside of this edge on the one hand changes into the side thereof via a downward protruding leakage rim and on the other hand fits on to the flank of the wing with a flat part that is situated higher than the underside of this leakage rim.

Because of the fact that the surface part is between the leakage rim and the wing flank the effect of the leakage rim is improved. Dung or urine which drips down from the upper part will because of this less easily come into contact with the wing flank.

With another preferred embodiment the body comprises several ribs running next to each other at a distance apart of which the upper parts delimit interjacent openings.

With this embodiment the wings of each pair of ribs running next to each other preferably extend to a different level under the supporting surface.

The body comprises for example several crosswise running ribs, which together form a grating with several openings delimited on the sides by the upper parts of four ribs.

With a most preferred embodiment the wing of each rib of which the upper part extends between neighbouring openings has flanks which symmetrically taper together downwards.

This invention is further explained in the following nonrestrictive description of a preferred embodiment of a floor grating according to this invention.

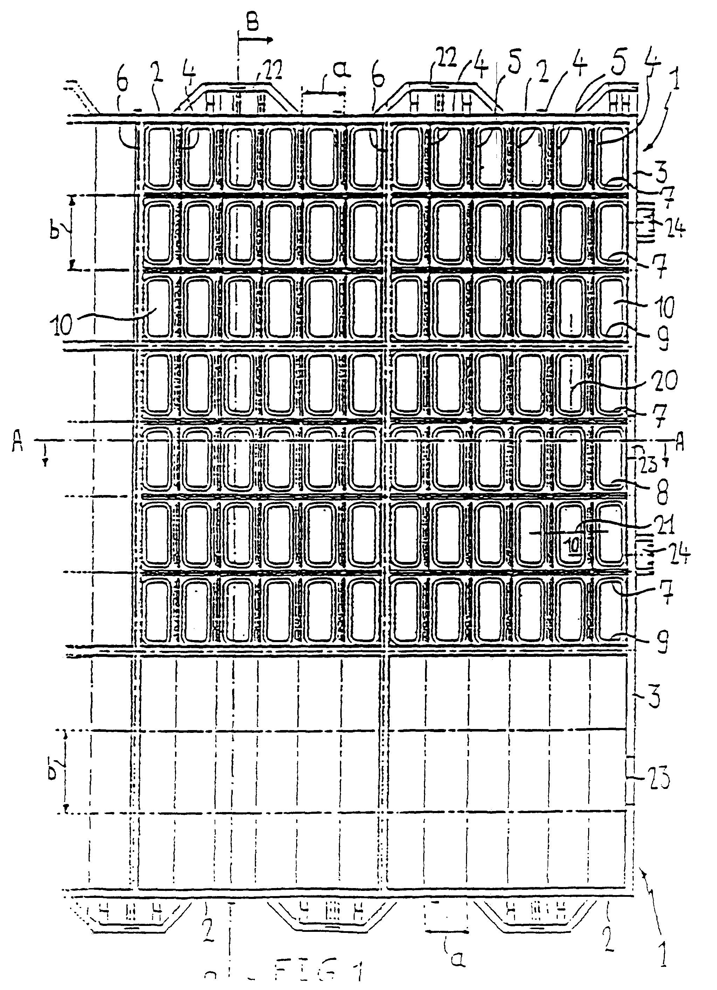

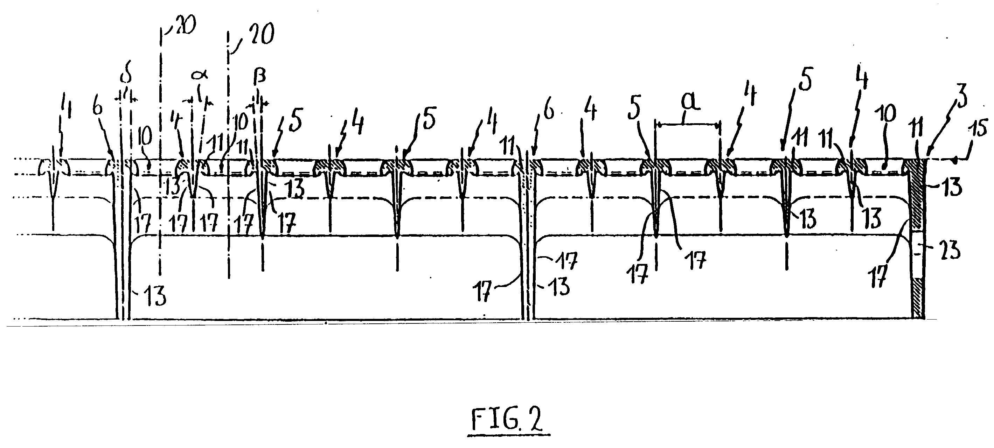

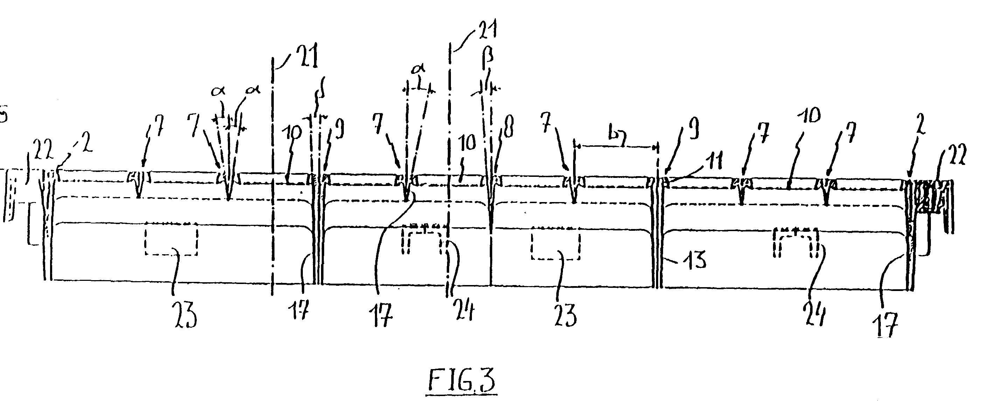

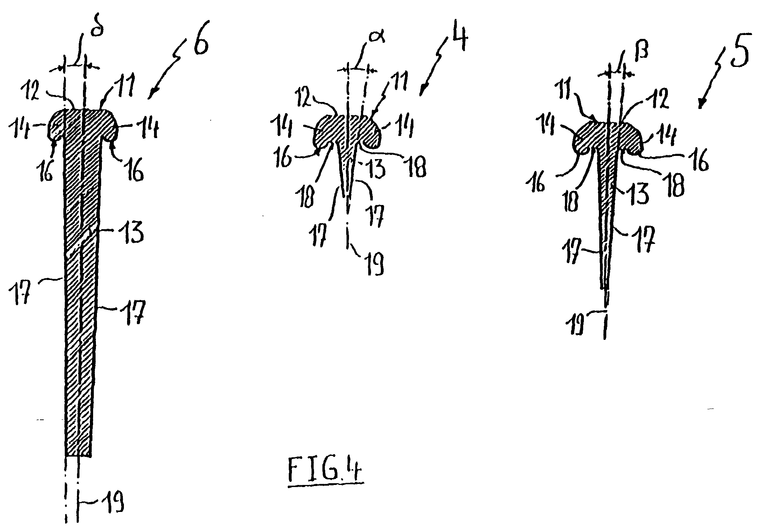

In this description reference is made to the drawings attached hereto, of which
Figure 1 represents a view from above of a part of the floor grating,
Figure 2 represents a cross-section according to the axis AA of the part of the floor grating represented in figure 1,
Figure 3 represents a cross-section according to the axis BB of the floor grating from figure 1,
Figure 4 represents separately in cross-section three different ribs of the floor grating.

The floor grating is made of synthetic material and comprises a rectangular frame (1), formed by four frame ribs (2), (3) with downward directed flanks (17). The two long opposite frame ribs (2) are connected to each other by a series of parallel running grating ribs (4), (5) and strengthening ribs (6), which extend according to the direction of the short frame ribs (3). Between two neighbouring ribs (3), (4), (5), (6) in each case one and the same intermediate distance (a) is provided.

The two short opposite frame ribs (3) are also connected to each other by a series of parallel running grating ribs (7), (8) and strengthening ribs (9), which extend according to the direction of the long frame ribs (2). Between two of these ribs (2), (7), (8), (9) in each case one and the same intermediate distance (b) is provided which is greater than the former intermediate distance (a) between the transverse ribs (3), (4), (5), (6).

The crosswise running ribs (3), (4), (5), (6); (2), (7), (8), (9) are connected to each other at the intersections and delimit a number of grating openings (10) with the form of a rectangle with rounded corners.

The grating ribs (4), (5); (7), (8) and the strengthening ribs (6); (9) have one and the same symmetrical profile over their total length and comprise an upper part (11) rounded on the sides with a flat top (12) on a vertically extending wing (13). The wing (13) is narrower than the upper part (11), so that the upper part (11) on both sides forms an edge (14) protruding past the wing (13). The wings (13) have flanks (17) which taper together in downward direction.

The ribs (4), (5), (6), (7), (8), (9) are with their flat tops (12) on nearly the same level (15) and form at that level (15) a supporting surface for the animals.

The underside of the edge (14) changes via a downward protruding leakage rim (16) into the side of the upper part (11). With each grating rib (4), (5); (7), (8) the underside of the edge (14) fits against a flank (17) of the wings (13) with a flat part (18) that is higher than the underside of the leakage rim (16).

Each rib (4 - 9) with the exception of the frame ribs (2), (3) has in profile a symmetrical form which has more or less the form of a mushroom. The frame ribs (2), (3) have a profile that corresponds to half of a strengthening rib (6), (9) cut off according to the vertical line of symmetry (19) and are also with the flat top (12) at the level (15) of the supporting surface.

Each symmetrical rib (4 - 9) has a vertical line of symmetry (19) and flanks (17) which in relation to this line of symmetry (19) form an angle (α), (β), (δ) so that the rib (4 - 9) gradually narrows downwards.

The floor grating has a first type of grating ribs (4), (7), a second type of grating ribs (5), (8), and strengthening ribs (6), (9). These three types of ribs (see figure 4) differ mutually through the amplitude of the angle (α, β, δ) which form their flanks (17) in relation to their line of symmetry (19).
With the first type of grating ribs (4), (7) this angle is approximately 6°, with the second type of grating ribs (5), (8) approximately 2° 30', and with the strengthening ribs (6), (9) approximately 1°.

Because of the fact that it is desired that for the two types of grating ribs (4), (7); (5), (8) one and the same width of underside of the wings (13) is provided, the wings (13) of the grating ribs (5), (8) of the second type - as a result of the smaller angle of inclination (β) of their flanks (17) - have a height which is almost twice that of the height of the wings (13) of the grating ribs (4), (7) of the first type.

In the series of grating ribs (4), (5), (6) which run parallel to the short frame ribs (3), several parallel strengthening ribs (6) are provided. Between two strengthening ribs (6) and between a strengthening rib (6) and a frame rib (3) in each case five grating ribs (4), (5) are provided (see figure 2).

In each group of five grating ribs (4), (5) in each case a grating rib (4) of the first type is provided between two grating ribs (5) of the second type or between a grating rib (5) of the second type and a strengthening rib (6) or a frame rib (3).

The openings (10) are delimited on the sides by the upper parts (11) of the ribs (2 - 9) and have a vertical plane of symmetry (20) parallel to the direction of the short frame ribs (3). The openings (10) exit from the underside between two opposite wing flanks (17) which form a different angle (α), (β), (δ) with the vertical. These wing flanks (17) are therefore asymmetrically disposed in relation to the vertical plane of symmetry (20) of each opening (10). Because of this the chance of dung remaining stuck between these flanks (17) is very small.

In the series of ribs (7), (8), (9) which run parallel to the long frame ribs (2) two strengthening ribs (9) are provided (see figure 3). Between each strengthening rib (9) and a respective long frame rib (2) two grating ribs (7) of the first type are provided. Between the two strengthening ribs (9) three grating ribs (7), (8) are provided. Beside the two strengthening ribs (9) a respective grating rib (7) of the first type extends, and there between is a grating rib of the second type (8).

Under the ribs (7), (8), (9) which run parallel to the long frame ribs (2) there are therefore also ribs running next to each other with opposite wing flanks (17) which are disposed asymmetrically in relation to a vertical plane of symmetry (21), parallel to the direction of the long frame ribs (2).

On the long frame ribs (2) hook-shaped elements (22) are provided in order to be able to hook the grating on to two parallel supporting slats. The short frame ribs (3) are provided with openings (23) and protrusions (24), which can respectively work together with protrusions (24) and openings (23) of a floor grating located adjacent thereto, in order to connect these floor gratings to each other, when constructing a floor for supporting animals.

This floor grating is particularly hygienic because of the fact that almost no dung remains stuck under the openings (10). Because of the fact that the floor grating comprises grating ribs (4) of the first type (with a limited height of the wings (13)) the total surface area of the floor grating is relatively small. This also ensures that this grating is more hygienic and more capable of being cleaned than known floor gratings. Furthermore through the special form of the grating ribs (4), (5), (7) (8) for one and the same passage of dung a better effect of the leakage rims (16) is provided.

## Claims

1. Flooring element for supporting animals, comprising a body with a top which forms the supporting surface for the animals, in which openings (10) are provided for the passage of dung, which exit from the underside between respectively opposite walls (17) which go apart from each other in a downward direction, **characterised in that** a number of openings (10) exit between two opposite walls (17) which form a different angle (α), (β), (δ) in relation to a plane of symmetry (20); (21) of the opening (10).

2. Flooring element for supporting animals, according to claim 1, **characterised in that** the aforementioned walls (17) extend downwards to a different height under the level (15) of the supporting surface.

3. Flooring element for supporting animals, according to claim 1 or 2, **characterised in that** the body comprises at least two ribs (2 - 9) running next to each other, that each rib (2 - 9) comprises an upper part (11) and thereunder a downward extending wing (13), that the tops (12) of these upper parts (11) are part of the supporting surface, and that the aforementioned opening (10) is delimited on the sides by these upper parts (11) while the aforementioned opposite walls (17) are the opposite flanks of the wings (13) of these ribs (2 - 9).

4. Flooring element for supporting animals, according to claim 3, **characterised in that** the upper part (11) of each rib (2 - 9) comprises an edge protruding in the direction of the plane of symmetry (20); (21) of the opening (10) past the wing (13) of the rib (2 - 9), that the underside of this edge (14) on the one hand changes into the side thereof via a downward protruding leakage rim (16) and on the other hand fits on to the flank (17) of the wing (13) via a flat part (18) that is situated higher than the underside of this leakage rim (16).

5. Flooring element for supporting animals, according to claim 3 or 4, **characterised in that** the body comprises several ribs (2 - 9) running next to each other at a distance apart, of which the upper parts (11) delimit interjacent openings (10).

6. Flooring element for supporting animals, according to claim 5, **characterised in that** the wings (13) of each pair of ribs (2 - 9) running next to each other extend to a different level under the level (15) the supporting surface.

7. Flooring element for supporting animals, according to claim 5 or 6, **characterised in that** the body comprises several crosswise running ribs (2 - 9), which together form a grating with several openings (10) delimited on the sides by the upper parts (11) of four ribs (2 - 9).

8. Flooring element for supporting animals, according to any of the claims 5 up to and including 7, **characterised in that** the wing (13) of each rib (4 - 9), of which the upper part (11) extends between neighbouring openings (10), has flanks (17) which symmetrically taper together downwards.

9. Floor for supporting animals, composed of a number of flooring elements provided next to each other according to any of the preceding claims.

## Patentansprüche

1. Bodenelement für Standflächen von Vieh, umfassend einen Körper mit einer Oberseite, die die Standfläche für das Vieh bildet, worin Öffnungen (10) für das Durchlassen von Dung vorgesehen sind, die an der Unterseite zwischen jeweils einander gegenüberliegenden Wänden (17), die in einer Abwärtsrichtung auseinanderweichen, enden, dadurch gekennzeichnet, dass eine Anzahl von Öffnungen (10) zwischen zwei einander gegenüberliegenden Wänden (17), die einen unterschiedlichen Winkel (α), (β), (δ) in Bezug zu einer Symmetrieebene (20); (21) der Öffnung (10) bilden, endet.

2. Bodenelement für Standflächen von Vieh, gemäß Anspruch 1, dadurch gekennzeichnet, dass die oben erwähnten Wände (17) sich nach unten bis zu einer unterschiedlichen Höhe unter dem Niveau (15) der Standfläche erstrecken.

3. Bodenelement für Standflächen von Vieh, gemäß Anspruch 1 oder 2, dadurch gekennzeichnet, dass der Körper zumindest zwei nebeneinander verlaufende Rippen (2-9) umfasst, dass jede Rippe (2-9) einen oberen Teil (11) und darunter einen sich nach unten erstreckenden Flügel (13) umfasst, dass die Oberseiten (12) dieser oberen Teile (11) Teil der Standfläche sind, und dass die oben erwähnte Öffnung (10) an den Seiten von diesen oberen Teilen (11) begrenzt wird, während die oben erwähnten einander gegenüberliegenden Wände (17) die gegenüberliegenden Flanken der Flügel (13) dieser Rippen (2-9) sind.

4. Bodenelement für Standflächen von Vieh, gemäß Anspruch 3, dadurch gekennzeichnet, dass der obere Teil (11) jeder Rippe (2-9) eine in Richtung der Symmetrieebene (20); (21) der Öffnung (10) über den Flügel (13) der Rippe (2-9) hinaus vorspringende Kante umfasst, dass die Unterseite dieser Kante (14) einerseits mittels eines nach unten ragenden Ablaufrandes (16) in deren Seite übergeht und andererseits mittels eines flachen Teils (18), das höher als die Unterseite dieses Ablaufrandes (16) angeordnet ist, an der Flanke (17) des Flügels (13) anschließt.

5. Bodenelement für Standflächen von Vieh, gemäß Anspruch 3 oder 4, dadurch gekennzeichnet, dass der Körper mehrere, in einem Abstand nebeneinander verlaufende Rippen (2-9) umfasst, deren obere Teile (11) dazwischenliegende Öffnungen (10) begrenzen.

6. Bodenelement für Standflächen von Vieh, gemäß Anspruch 5, dadurch gekennzeichnet, dass die Flügel (13) jedes nebeneinander verlaufenden Rippenpaars (2-9) sich bis auf ein unterschiedliches Niveau unter dem Niveau (15) der Standfläche erstrecken.

7. Bodenelement für Standflächen von Vieh, gemäß Anspruch 5 oder 6, dadurch gekennzeichnet, dass der Körper mehrere kreuzweise verlaufende Rippen (2-9) umfasst, die zusammen ein Gitter mit mehreren Öffnungen (10), die an den Seiten von den oberen Teilen (11) von vier Rippen (2-9) begrenzt werden, bilden.

8. Bodenelement für Standflächen von Vieh, gemäß einem der Ansprüche 5 bis einschließlich 7, dadurch gekennzeichnet, dass der Flügel (13) jeder Rippe (4-9), dessen oberer Teil (11) sich zwischen benachbarte Öffnungen (10) erstreckt, Flanken (17) aufweist, die sich symmetrisch nach unten hin verjüngen.

9. Bodenstandfläche für Vieh, zusammengesetzt aus einer Anzahl von nebeneinander angeordneten Bodenelementen gemäß einem der vorangehenden Ansprüche.

## Revendications

1. Elément de planchéiage pour supporter des animaux, comprenant un corps dont le sommet forme la surface de support pour les animaux, dans lequel on prévoit des ouvertures (10) pour le passage du fumier qui s'évacue depuis le côté inférieur entre des parois respectivement opposées (17) qui s'écartent l'une de l'autre en direction descendante, caractérisé en ce que plusieurs ouvertures (10) existent entre deux parois opposées (17) qui forment un angle différent (α), (β), (δ) par rapport au plan de symétrie (20); (21) de l'ouverture (10).

2. Elément de planchéiage pour supporter des animaux selon la revendication 1, caractérisé en ce que les parois susmentionnées (17) s'étendent vers le bas jusqu'à une hauteur différente en-dessous du niveau (15) de la surface de support.

3. Elément de planchéiage pour supporter des animaux selon la revendication 1 ou 2, caractérisé en ce que le corps comprend au moins deux nervures (2 - 9) s'étendant à côté l'une de l'autre, en ce que chaque nervure (2 - 9) comprend une partie supérieure (11) et en-dessous de cette dernière, une aile (13) s'étendant vers le bas, en ce que les sommets (12) de ces parties supérieures (11) font partie de la surface de support, et en ce que l'ouverture susmentionnée (10) est délimitée sur les côtés par ces parties supérieures (11), tandis que les parois opposées susmentionnées (17) représentent les flancs opposés des ailes (13) de ces nervures (2 - 9).

4. Elément de planchéiage pour supporter des animaux selon la revendication 3, caractérisé en ce que la partie supérieure (11) de chaque nervure (2 - 9) comprend un bord faisant saillie dans la direction du plan de symétrie (20); (21) de l'ouverture (10) au-delà de l'aile (13) de la nervure (2 - 9), en ce que le côté inférieur de ce bord (14), d'une part est soumis à une modification latérale via un rebord de fuite (16) faisant saillie vers le bas, et d'autre part vient se disposer sur le flanc (17) de l'aile (13) via une partie plate (18) qui est située plus haut que le côté inférieur de ce rebord de fuite (16).

5. Elément de planchéiage pour supporter des animaux selon la revendication 3 ou 4, caractérisé en ce que le corps comprend plusieurs nervures (2 - 9) s'étendant les unes à côté des autres en étant écartées l'une de l'autre, dont les parties supérieures (11) délimitent des ouvertures interjacentes (10).

6. Elément de planchéiage pour supporter des animaux selon la revendication 5, caractérisé en ce que les ailes (13) de chaque paire de nervures (2 - 9) s'étendant les unes à côté de autres s'étendent jusqu'à un niveau différent en-dessous du niveau (15) de la surface de support.

7. Elément de planchéiage pour supporter des animaux selon la revendication 5 ou 6, caractérisé en ce que le corps comprend plusieurs nervures (2 - 9) s'étendant en direction transversale, qui forment ensemble un grillage muni de plusieurs ouvertures (10) délimitées sur les côtés par les parties supérieures (11) de quatre nervures (2 - 9).

8. Elément de planchéiage pour supporter des animaux selon l'une quelconque des revendications 5 jusque et y compris 7, caractérisé en ce que l'aile (13) de chaque nervure (4 - 9), dont la partie supérieure (11) s'étend entre des ouvertures adjacentes (10), possède des flancs (17) qui se rétrécissent conjointement de manière symétrique vers le bas.

9. Plancher pour supporter des animaux composé de plusieurs éléments de planchéiage prévus les uns à côté des autres selon l'une quelconque des revendications précédentes.
